## Europäisches Patentamt
## European Patent Office
## Office européen des brevets

(11) Veröffentlichungsnummer: **0 197 243**
**B1**

(12) **EUROPÄISCHE PATENTSCHRIFT**

(45) Veröffentlichungstag der Patentschrift:
14.12.88

(21) Anmeldenummer: 86100629.4

(22) Anmeldetag: 18.01.86

(51) Int. Cl.⁴: **G 01 B 3/22,** G 01 B 21/04

(54) **Mehrkoordinaten-Tastkopf.**

(30) Priorität: 08.03.85 DE 3508396

(43) Veröffentlichungstag der Anmeldung:
15.10.86 Patentblatt 86/42

(45) Bekanntmachung des Hinweises auf die Patenterteilung:
14.12.88 Patentblatt 88/50

(84) Benannte Vertragsstaaten:
AT CH DE FR GB IT LI NL SE

(56) Entgegenhaltungen:
EP-A-0 088 596
DE-B-2 841 424
GB-A-2 094 979
US-A-4 136 458

(73) Patentinhaber: **Dr. Johannes Heidenhain GmbH,
Postfach 1260, D-8225 Traunreut (DE)**

(72) Erfinder: **Feichtinger, Kurt, Katzwalchen Nr. 26,
D-8221 Palling (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft einen Mehrkoordinaten-Tastkopf gemäß dem Oberbegriff des Anspruchs 1.

Es sind eine Vielzahl messender und schaltender Mehrkoordinaten-Tastköpfe bekannt. Bei beiden Ausführungsarten ist es besonders wichtig, daß der Taststift nach Auslenkungen in beliebiger Richtung wieder in seine definierte Nullage zurückkehrt. Verschiedenartige Versuche, Lagerungen des Taststiftes zum Tastergehäuse besonders vorteilhaft auszubilden, wurden deshalb unternommen.

In der DE-OS-2 841 424 ist ein Meßkopf angegeben der eine Dreipunktlagerung aufweist. Im Tastkopfgehäuseboden sind drei V-Nuten sternförmig angeordnet. Im Meßteller sind drei Stifte mit sphärischer Oberfläche fest fixiert. Der Meßteller wird mittels einer Feder in Richtung des Tastkopfgehäusebodens gedrückt und die Stifte nehmen in den zugeordneten V-Nuten eine festgelegte Position ein, in welche sie nach einer Auslenkung des Ferner ist aus der EP-A2-0 088 596 eine Lageranordnung mit ebenfalls drei Lagerstellen bekannt. Die Lagerstellen sind ebenfalls in einer Ebene gleichmäßig über den Umfang verteilt. Im Tastkopfgehäuseboden sind drei Kugeln angeordnet, welche zur Montage in Richtung des Taststiftes verschiebbar sind. Die drei Gegenlager im Meßteller sind unterschiedlich ausgebildet. Ein Gegenlager ist als Verdrehsicherung in Form einer Bohrung ausgebildet. Das zweite Gegenlager weist eine V-Nut auf, welche fest zum Mittelpunkt des Meßtellers ausgerichtet ist. Ein drittes Gegenlager ist eine ebene Auflage, parallel zum Meßteller und senkrecht zur Kraftkomponente der Andruckfeder.

Es ist allgemein bekannt, daß sich Meßkraftunterschiede und die damit verbundenen biegungsbedingten Schaltwegdifferenzen bei verschiedenen Antastrichtungen durch die Erhöhung der Anzahl von Lagerstellen vermindert. Bei einer Erhöhung der Anzahl von Lagerstellen erhöht sich aber bei den bisher bekannten Tastkopfsystemen der Aufwand für die Herstellung der Paßungslagerstellen erheblich, und es besteht die Gefahr, daß das System statisch überbestimmt wird.

Durch unterschiedliche Ausführungsformen der Lagerstellen wurde deshalb beim angegebenen Stand der Technik nach EP-A2-0 008 596 versucht, eine statische Überbestimmung, aber auch Unterbestimmung zu vermeiden.

Unterschiedlich ausgeführte Lagerstellen sind somit bei beiden angegebenen Systemen notwendig, wenn mehr als drei Lagerstellen geschaffen werden sollen. Dadurch wird zwar eine hohe Nullpunktstabilität geschaffen, mit dem Nachteil, daß bei einer Antastung der Tastkugel an ein Werkstück je nach Antastrichtung ein Ausweichen in verschiedene Vorzugsrichtungen wahrscheinlich wird.

Aufgabe der Erfindung ist es, eine Lagerung für Mehrkoordinaten-Tastköpfe anzugeben, die die Position des beweglichen Teiles zum gehäusefesten Teil des Tasters hochgenau festlegt und definierte sowie konstante Antastbedingungen in allen Antastrichtungen gewährleistet.

Des weiteren wird mit der Erfindung eine präzise und einfache Montage einer Vielzahl gleichartig ausgebildeter Lagerstellen angestrebt, ohne daß Bauteile mit hoher Präzision verwendet werden müssen.

Diese Aufgabe wird gemäß der Erfindung durch die Merkmale des Anspruchs 1 gelöst.

Die erfindungsgemäße Anordnung bietet die Gewähr dafür, daß eine gute Rückstellgenauigkeit des Taststiftes in seine Nullage nach jeder Auslenkung garantiert ist. Durch die Anordnung gleichartiger Lagerstellen gleichmäßig über den Umfang des Meßtellers in einer Ebene, wird ein Ausweichen der Antastkugel je nach Antastrichtung in verschiedene Vorzugsrichtungen weitgehend verhindert und somit wird eine Wiederholbarkeit der Messung unabhängig von der Antastrichtung weitgehend gesichert.

Eine in der Erfindung angegebene vorteilhafte Montage der Lagerteile ist einfach und hochgenau durchführbar, wobei eine statische Über- aber auch Unterbestimmung des Lagersystems ausgeschlossen wird.

Weitere bevorzugte Einzelheiten des erfindungsgemäßen Mehrkoordinaten-Tastkopfes sind Gegenstand der Unteransprüche.

Anhand der Zeichnungen wird ein Ausführungsbeispiel näher erläutert.

Es zeigen

Figur 1 einen Axialschnitt durch einen erfindungsgemäßen Tastkopf,
Figur 2 einen Schnitt in der Ebene II - II aus Figur 1 mit abgenommenem Meßteller,
Figur 3a u. 3b das Prinzip der Lagereinstellung.

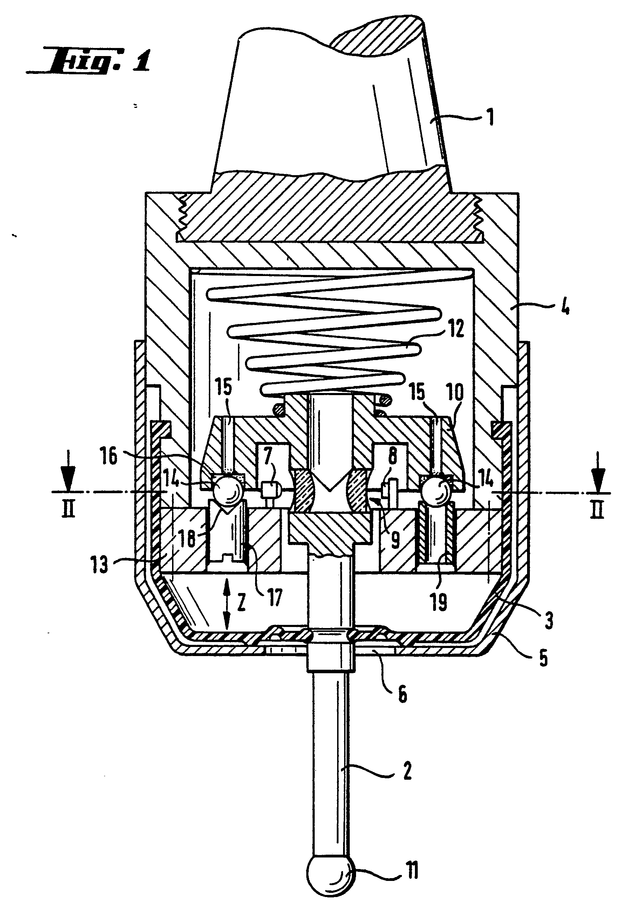

In Figur 1 ist der gesamte Aufbau eines Mehrkoordinaten-Tastkopfes ersichtlich. Dieser gezeigte Taster ist als schaltender Taster für ein Meßsystem ausgeführt. Durch einen Schaft 1 kann der Taster in eine Spindel einer nicht dargestellten Meß- oder Bearbeitungsmaschine eingesetzt werden. Die Auslenkung eines Taststiftes 2 ist in allen Richtungen möglich. Eine Dichtung 3 schließt den Zwischenraum zwischen einem Tastkopfgehäuse 4 und dem Taststift 2. Ein Blechschutz 5 verhindert die Beschädigung der Dichtung 3 durch heiße Späne, läßt aber einen freien Raum 6, der dem Taststift 2 eine begrenzte Auslenkung aus seiner Nullage gestattet.

Eine Detektoranordnung 7, 8, 9 zur Erfassung der Auslenkung des Taststiftes 2 gibt bei einem bestimmten Auslenkungsbetrag einen Antastimpuls ab, welcher zur Steuerung einer Werkzeugmaschine oder zur Bestimmung des Zeitpunktes der Meßwertübernahme einer Koordinaten-Meßmaschine herangezogen wird. Die Detektoranordnung 7, 8, 9 besteht aus einem im Tastkopfgehäuse 4 feststehenden optischen Sender 7 und einem dazu ausgerichteten ebenfalls feststehenden Differentialphotoelement 8. In der optischen Achse der beiden Elemente 7, 8 ist ein Linsensystem 9 fest am beweglichen Taststift 2 angebracht.

Ein Meßteller 10 ist mit dem Taststift 2 fest verbunden, welcher am Ende eine Antastkugel 11 besitzt. Eine Fläche des Meßtellers 10 steht mit dem Tastkopfgehäuse 4 mittels einer Feder 12 in Verbindung. Die Gegenfläche ist ein Teil der Lagerung des Meßtellers 10 mit dem Tastkopfgehäuseboden 13. Diese Lagerung muß exakt ausgeführt sein, da eine statische Unter- bzw. Überbestimmung Meßfehler verursacht.

Während eines Antastvorganges an ein Werkstück wird der Meßteller 10 durch die Feder 12 an Ort und Stelle gehalten, deren Kraft der Wirkung des Kontaktdrucks der Antastkugel 11 auf das Werkstück entgegenwirkt, und verhindert, daß der Meßteller 10 in der Lagerung verschwenkt bzw. abgehoben wird, wenn diese Kraft unter einem bestimmten Wert liegt. Solange der Meßteller 10 gegen den Tastkopfgehäuseboden 13 durch die Feder 12 gehalten wird, bilden Meßteller 10 und Tastkopfgehäuse 4 eine Einheit mit dem Freiheitsgrad Null. Nach einer Auslenkung wird die Feder 12 so belastet, daß sie den Meßteller 10 gegen den Tastkopfgehäuseboden 13 zurückführt.

Die Lagerung, ausgeführt als Mehrpunktlager, besteht erfindungsgemäß aus gleichmäßig über den Umfang des Meßtellers 10 verteilter und in einer Ebene angeordneter Kugeln 14, welche fest im Meßteller 10 verankert sind. Eine Bohrung 15 am Befestigungsgrund jeder Kugel 14 dient zum Zuführen eines Klebstoffes 16 und zum Durchschlagen einer evtl. beschädigten Kugel 14. Jeder der sechzehn Kugeln 14 ist als Gegenlager ein Zylinderkörper 17 zugeordnet. Fünfzehn dieser Zylinderkörper 17 sind an dem Ende, welches den Kugeln 14 zugeordnet ist, mit einer V-Nut 18 versehen. Ein Zylinderkörper ist in Form eines Hohlzylinders 19 zur Sicherung des Meßtellers 10 gegen Verdrehen ausgebildet.

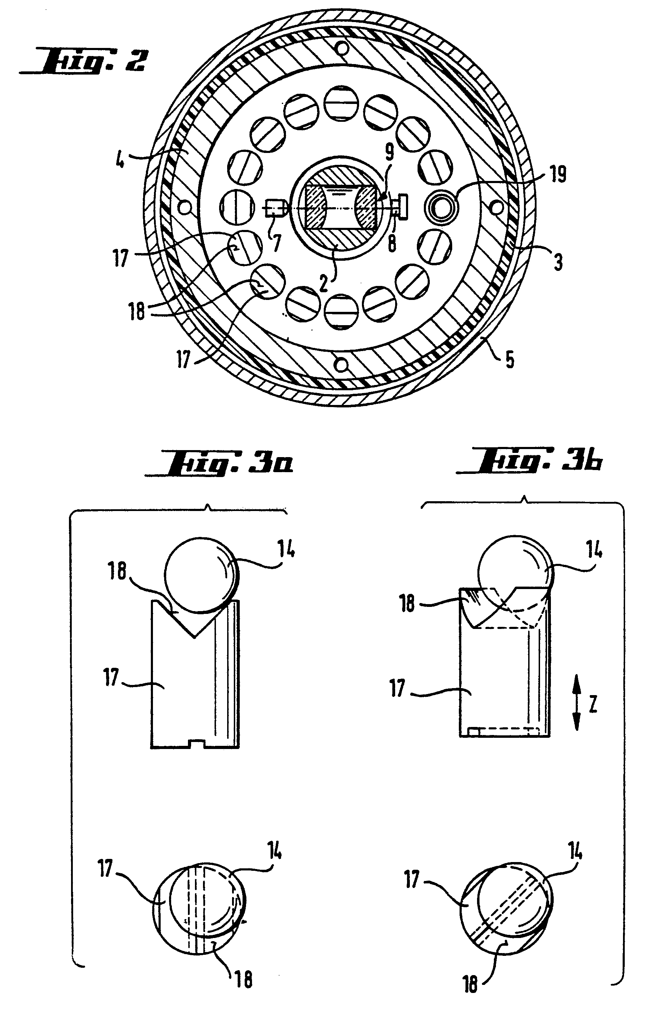

Die Zylinderkörper 17 sind so ausgerichtet, daß sich ihre Längsachse parallel zur Längsachse des in der Nullage ruhenden Taststiftes 2 befinden. Damit jede Kugel 14 definiert in die zugeordnete V-Nut 18 zu liegen kommt, ist jeder Zylinderkörper 17 um seine Lähgsachse drehbar gelagert sowie in seiner Längsachse verschiebbar. Wenn nun bei der Montage des Meßtellers 10 mit dem Tastkopfgehäuse 4 ein Kugelmittelpunkt nicht mit dem Grund der V-Nut 18 koordiniert (Figur 3a), paßt sich der Zylinderkörper 17 der Kugel 14 an, indem er sich um die eigene Längsachse dreht (Figur 3b).

Nach der relativ einfach durchführbaren Einjustierung der Zylinderkörper 17 werden diese fest mit dem Tastkopfgehäuseboden 13 verbunden, bevorzugt eingeklebt. Jede Lagerstelle wird somit durch das Zusammenwirken der Oberflächenbereiche der Kugeln 14 mit den Oberflächenbereichen der V-Nuten 18 der im Tastkopfgehäuse 4 fest angeordneten Zylinderkörper 17 gebildet.

Eine genaue und einfache Ausrichtung der V-Nuten 18 der Zylinderkörper 17 zu den Kugeln 14 wird dadurch erreicht, daß bei der Montage vor der Aushärtung des Klebstoffes, welcher die Zylinderkörper 17 im Tastkopfgehäuseboden 13 bei späterem Meßbetrieb fest fixieren soll, die Zylinderkörper 17 mittels einer nicht gezeigten Vibrationseinrichtung automatisch, schnell und vollständig ausgerichtet werden. Die Vibrationseinrichtung enthält eine Federanordnung, welche jeden Zylinderkörper 17 in der Z-Richtung einjustiert. Durch laufende Verringerung der hochfrequenten Vibrationsamplituden wird sichergestellt, daß sich die Zylinderkörper 17 mit zunehmendem Aushärtungsgrad des Klebstoffes außerdem in eine stabile Lage um ihre eigene Achse drehen.

Die Zylinderkörper müssen nicht unbedingt wie in gezeigter Weise Bestandteil des Tastkopfgehäusebodens sein, sie können ebenso gut in den Meßteller integriert werden. Des weiteren ist außer der gezeigten Möglichkeit eine Paarung der Lagerelemente u.a. noch folgende Variante gegeben: Stift mit sphärischer Oberfläche ./. Zylinderkörper mit V-Nut.

In den Figuren 1 und 2 ist einer der Zylinderkörper 17 als Hohlzylinder 19 zur Sicherung des Meßtellers 10 gegen Verdrehen ausgebildet. Diese Verdrehsicherung kann aber auch als sphärische Vertiefung bzw. als negative Pyramidenspitze ausgeführt sein.

Bei einer größeren Anzahl von erfindungsgemäß ausgestalteten Lagerstellen kann die Verdrehsicherung auch entfallen, da die Wahrscheinlichkeit mit zunehmenden Lagerstellen zunimmt, daß sich die Zylinderkörper 17 mit den V-Nuten 18 bei der Montage so gegeneinander verdrehen, daß sie bei erfolgter Montage als Sicherung gegen das Verdrehen des Meßtellers 10 wirken.

Eine nicht gezeigte aber vorteilhafte konstruktive Abänderung des beschriebenen Ausführungsbeispiels besteht darin, daß die Zylinderkörper mit gleichmäßiger Neigung in Richtung der Antastkugel im Tastkopfgehäuseboden befestigt sind.

Besonders vorteilhaft wird jene Neigung der Zylinderkörper angesehen, daß die Längsachse jedes Zylinderkörpers durch den Mittelpunkt der Antastkugel verläuft. Diese Anordnung garantiert bei jeder beliebigen Antastrichtung auch bei größeren Auslenkungen des Taststiftes eine definierte Kraftverteilung von Antastkugel zu Lagerstelle.

Es wird noch darauf hingewiesen, daß in den Zeichnungen nur eine Auswahl gleicher Kugeln 14 und Zylinderkörper 17 mit einem Bezugzeichen versehen wurde.

**Patentansprüche**

1. Mehrkoordinaten-Tastkopf mit wenigstens einem in mehrere Koordinatenrichtungen auslenkbaren Taststift (2), der durch eine Rückstellkraft in eine seine Nullage bestimmende Lagerung gedrängt wird, welche durch das Zusammenwirken der Oberflächenbereiche von Kugelkörpern (14) mit den Oberflächenbereichen von Nuten (18) gebildet wird, wobei die Kugelkörper (14) mit den zugeordneten Nuten (18) als Lagerstellen zentrisch zum Taststift (2) gleichmäßig in einer Ebene senkrecht zum Taststift (2) verteilt sind, und eine Vielzahl von Lagerstellen vorliegt, dadurch gekennzeichnet, daß bei mindestens zwei dieser Lagerstellen die Kugelkörper (14) fest in einer Ebene verrückbar am beweglichen oder am stationären Teil des Tastkopfes montiert sind, daß die den Kugelkörpern (14) ungeordneten Nuten (18) in Zylinderkörpern (17) eingebracht sind und daß die Nuten (18) bzw. Zylinderkörper (17) auf die Kugelkörper (14) ausgerichtet und unverrückbar befestigt sind, wobei die Zylinderkörper (17) von ihrer Befestigung um ihre eigene Achse drehbar und in axialer Richtung verschiebbar und somit den zugehörigen Kugelkörpern (14) anpaßbar sind.

2. Mehrkoordinaten-Tastkopf nach Anspruch 1, dadurch gekennzeichnet, daß die Kugelkörper (14) im Meßteller (10) befestigt und die Zylinderkörper (17) im Tastkopfgehäuseboden (13) angeordnet sind.

3. Mehrkoordinaten-Tastkopf nach Anspruch 1, dadurch gekennzeichnet, daß mindestens eine Lagerstelle als Verdrehsicherung ausgebildet ist.

4. Mehrkoordinaten-Tastkopf nach Anspruch 1, dadurch gekennzeichnet, daß die Nut der Zylinderkörper (17) eine V-Nut (18) ist.

5. Mehrkoordinaten-Tastkopf nach Anspruch 1, dadurch gekennzeichnet, daß die Längsachsen der im Tastkopfgehäuseboden (13) eingebrachten Zylinderkörper (17) mit der Längsachse des Taststiftes (2) in Richtung der Antastkugel (11) einen spitzen Winkel einschließen.

6. Mehrkoordinaten-Tastkopf nach Anspruch 5, dadurch gekennzeichnet, daß die Längsachsen der im Tastkopfgehäuseboden (13) eingebrachten Zylinderkörper (17) durch die Mitte der Antastkugel (11) verlaufen.

7. Mehrkoordinaten-Tastkopf nach Anspruch 1, dadurch gekennzeichnet, daß die Kugelkörper (14) im Tastkopfgehäuseboden (13) befestigt sind und die Zylinderkörper (17) Bestandteil des Meßtellers (10) sind.

8. Mehrkoordinaten-Tastkopf nach Anspruch 1, dadurch gekennzeichnet, daß die Längsachsen der Zylinderkörper (17) parallel zu der Längsachse des Taststiftes (2) verlaufen.

**Claims**

1. Multi-coordinate sensing head with at least one sensing rod (2) deflectable in a plurality of coordinate directions, which is urged by a restoring force into its seating determining its null position, which seating is formed through the cooperation of the surface regions of spherical bodies (14) with the surface regions of grooves (18), wherein the spherical bodies (14) with the associated grooves (18) are uniformly distributed in a plane perpendicular to the sensing rod (2) as bearings concentric with the sensing rod (2), and provide a plurality of bearing locations, characterized in that, at at least two of these bearing locations, the spherical bodies (14) are mounted fixed in a plane, irremovably on the movable or on the stationary part of the sensing head, in that the grooves (18) associated with the spherical bodies (14) are formed in cylindrical bodies (17) and in that the grooves (18) or the cylindrical bodies (17) are directed towards the spherical bodies (14) and are irremovably fixed, wherein the cylindrical bodies (17) are, before their fixing, rotatable about their own axes and displaceable in the axial direction and are thereby adaptable to the associated spherical bodies (14).

2. Multi-coordinate sensing head according to claim 1, characterized in that the spherical bodies (14) are fixed in the measuring plate (10) and the cylindrical bodies (17) are arranged in the sensing head housing bottom (13).

3. Multi-coordinate sensing head according to claim 1, characterized in that at least one bearing location is formed as a security against rotation.

4. Multi-coordinate sensing head according to claim 1, characterized in that the groove of the cylindrical bodies (17) is a V-groove (18).

5. Multi-coordinate sensing head according to claim 1, characterized in that the longitudinal axes of the cylindrical bodies (17) fitted in the sensing head housing bottom (13) include an acute angle with the longitudinal axis of the sensing rod (2) in the direction of the sensing ball (11).

6. Multi-coordinate sensing head according to claim 5, characterized in that the longitudinal axes of the cylindrical bodies (17) fitted in the sensing head housing bottom (13) run through the centre of the sensing ball (11).

7. Multi-coordinate sensing head according to claim 1, characterized in that the spherical bodies (14) are fixed in the sensing head housing bottom (13) and the cylindrical bodies (17) are components of the measuring plate (10).

8. Multi-coordinate sensing head according to claim 1, characterized in that the longitudinal axes of the cylindrical bodies (17) run parallel to the longitudinal axis of the sensing rod (2).

## Revendications

1. Capteur à coordonnées multiples comprenant au moins une pointe de contact (2) qui, pouvant être déviée dans plusieurs directions des coordonnées, est ramenée par une force de rappel dans un montage déterminant sa position zéro et formé par l'interaction de zones superficielles de corps sphériques (14) et des zone superficielles de rainures (18), les corps sphériques (14) avec les rainures y associées (18), en tant que points d'appui, étant régulièrement répartis centralement par rapport à la pointe de contact (2) dans un plan perpendiculaire à ladite pointe de contact (2), un grand nombre de points d'appui étant prévu, caractérisé par le fait que, dans le cas d'au moins deux de ces points d'appui, les corps sphériques (14) sont montés à poste fixe dans un plan sur la partie mobile ou sur la partie stationnaire du capteur, que les rainures (18), associées aux corps sphériques (14), sont pratiquées dans des corps cylindriques (17) et que les rainures (18) ou les corps cylindriques (17) sont alignés sur les corps sphériques et montés à poste fixe, les corps cylindriques (17) étant mobiles en relation autour de leur propre axe dans leur fixation et déplaçables dans le sens axial et pouvant ainsi s'adapter aux corps sphériques (14) y associés.

2. Capteur à coordonnées multiples selon la revendication 1, caractérisé par le fait que les corps sphériques (14) sont fixés dans le plateau de mesure (10) et que les corps cylindriques (17) sont disposés dans le fond (13) du boîtier du capteur.

3. Capteur à coordonnées multiples selon la revendication 1, caractérisé par le fait qu'au moins un point d'appui est réalisé sous la forme d'un dispositif anti-rotation.

4. Capteur à coordonnées multiples selon la revendication 1, caractérisé par le fait que la rainure des corps cylindriques (17) est une rainure (18) en forme de V.

5. Capteur à coordonnées multiples selon la revendication 1, caractérisé par le fait que les axes longitudinaux des corps cylindriques (17) logés dans le fond (13) du boîtier du capteur forment un angle aigu avec l'axe longitudinal de la pointe de contact (2) en direction de la bille (11) du capteur.

6. Capteur à coordonnées multiples selon la revendication 5, caractérisé par le fait que les axes longitudlnaux des corps cylindriques (17) logés dans le fond (13) du boîtier du capteur passent par le centre de la bille (11) de celui-ci.

7. Capteur à coordonnées multiples selon la revendication 1, caractérisé par le fait que les corps sphériques (14) sont fixés dans le fond (13) du boîtier du capteur et que les corps cylindriques (17) font partie intégrante du plateau de mesure (10).

8. Capteur à coordonnées multiples selon la revendication 1, caractérisé par le fait que les axes longitudinaux des corps cylindriques (17) sont disposés parallèlement à l'axe longitudinal de la pointe de contact (2).

# Fig. 1

Fig. 2

Fig. 3a

Fig. 3b